# EUROPEAN PATENT APPLICATION

(11) **EP 1 197 865 A1**
(43) Date of publication of application: **17.04.2002**
(21) Application number: 00203533.5
(22) Date of filing: 13.10.2000
(51) Int. Cl.: G06F 11/36

(54) **A system and a method for automated testing of software**

(71) Applicant: CMG Eindhoven B.V., 5657 EA Eindhoven (NL)
(72) Inventor: Jacobs, Harro Silvester, 5605 JB Eindhoven (NL); De With, Peter Hendrik Nelis, 5605 JB Eindhoven (NL)
(74) Representative: Dohmen, Johannes Maria Gerardus

(57) **Abstract**

A system (10) and a method for automated testing of software, comprising a first or host processing device (11), a second or target processing device (12), and communication means (13) for duplex exchange of data between the processing devices (11, 12) in accordance with a test suite. The target processing device (12) comprises the software to be tested. The host processing device (11) may be a host computer arranged for processing and storing a first part of said test suite. The target processing device (12) is arranged for storing and processing a second part of said test suite. The target processing device (12) may comprise embedded software to be tested.

## Description

### Field of the Invention

The present invention relates generally to the testing of software and, more specifically, to automated testing of embedded software.

### Background of the Invention

Due to the growing complexity and size of computer software, together with strong demands on time-to-market and quality requirements, testing of software is an item that should be addressed during software development. In particular software of embedded systems has evolved from conventionally performing certain control functions to multiprocessing tasks, including applications and user interactions, nowadays. Recent architectures for high-end digital audio and video systems, for example, contain (multiple) 32- or even 64-bit Central Processing Units (CPUs) and Digital Signal Processors (DSPs) and up to 128 kB Random Access Memory (RAM), having a powerful instruction set for running advanced software.

Traditionally, testing is carried out during the last phases of the software development life cycle. As a consequence, testing activities are often subject to high time pressure, which may result in delayed market introduction or impaired product quality. Furthermore, during software development, it is advisable to re-execute tests for completed components on a regular basis. Re-execution of tests plays a crucial role during software maintenance, where new releases should be verified thoroughly. Automated test execution contributes to a good indication of the product quality over time.

In the past, applicant has proposed an architecture for automated testing of software, featuring the possibility to start test developments in an early stage and providing the benefit of automated and reproducible tests.

This known test system, called "TestFrame"® , performs a software test on two levels:
1) the so-called "test specification" and
2) the so-called "test implementation" or "test navigation".

In the test specification, spread sheets are used in which high-level keywords and parameters, i.e. so-called "action words", are listed. These action words are domain specific and represent an abstract definition of the test stimuli and the expected response(s). The spread sheets are based on the actual software requirements and do not consider the interfaces of the software to be tested. The test developer defines the action words and constructs the spread sheets.

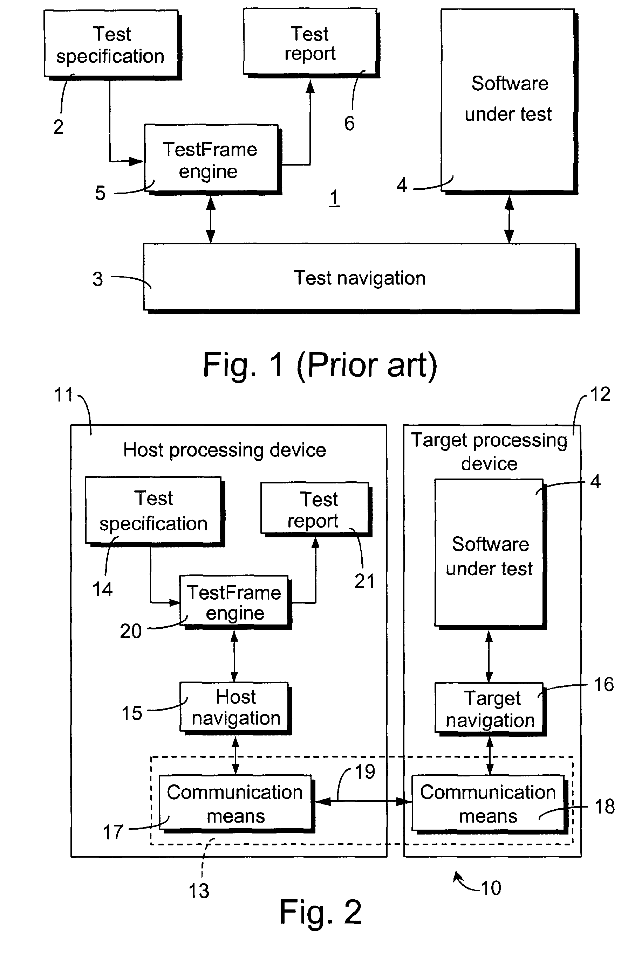

In the test navigation phase, the action words that have been defined during the test specification have to be linked or navigated to the actual interfaces of the software to be tested. This linking may be a one-to-one mapping on the interface functions of the system comprising the software to be tested, for example. Because of the allowed abstraction in the test specification, the test navigation can be considerably large. The architecture of the known TestFrame system 1 is shown in figure 1.

The figure clearly shows the separation between the test specification, i.e. test specification block or module 2, and the test navigation, i.e. test navigation block or module 3. The test navigation block 3 controls and observes the software 4 to be tested. The test specification block 2 and the test navigation block 3 are linked by a so-called TestFrame engine 5, which is a batch tool that takes care of the test execution. The TestFrame engine 5 parses the test specification, i.e. the spread sheets, and communicates each action word to the test navigation. The TestFrame engine 5 generates a test report 6 with a complete execution trace of the test as well as a management summary.

The separation between the test specification and the test navigation allows for structured development of test suites. The test specification can already be written at an early stage of the software development, when the first requirements are known. Test navigation can be developed at a later stage, when the software and hardware interfaces of the system to be tested have been defined.

With the known TestFrame architecture disclosed above, the test suite runs on the processing device of the system comprising the software to be tested. Therefore, this processing device has to be "oversized" in order to run the test suite and, the test suite has to be written in a code which is adapted to a particular type of processing device.

As mentioned before, the complexity of embedded software is rapidly increasing. The size of a test suite may become very large, and sometimes even exceeds the size of the software to be tested. Therefore, an architecture for testing embedded software should enable a controlled and incremental development of test suites.

Furthermore, a large variety of embedded or target processing devices exists in practise, resulting in a broad choice of processors, boards, (real-time) operating systems, programming languages, development environments, etcetera. Accordingly, an architecture for the automated testing of embedded software should be able to deal with these differences.

Typically, embedded processing devices have constrained resources with respect to, for example, processing power and memory size. This, because the costs of an embedded system should be as low as possible as an embedded system just forms part of a larger product. Embedded systems are often not oversized, due to small profit margins. Therefore, a general architecture for the testing of software, and in particular for the testing of embedded software, should be apt to such situations.

Those skilled in the art will appreciate that the know TestFrame architecture does not support the above-indicated requirements, i.e. support of increased test suites, providing test suites dealing with a large variety of processing devices and support for testing of software of (embedded) processing devices having limited resources.

### Summary of the Invention

It is an object of the present invention to provide a system for automated testing of software, capable of handling test suites having a size which may exceed the size of the software to be tested, and supporting a large variety of processing devices and hardware interfaces on the physical boundaries of a processing device, which interfaces are controlled or monitored by the software to be tested.

These and other objects and advantages are addressed by the present invention, providing a system for automated testing of software, comprising a first or host processing device, a second or target processing device, and communication means for duplex exchange of data between the processing devices in accordance with a test suite, the target processing device comprising the software to be tested.

The system according to the present invention comprises two processing devices for carrying out the software test procedure. A first or host processing device, which can be a Personal Computer (PC) storing large quantities of data and test software, and a second or target processing device which, in general, will be limited with respect to processing speed and memory size, and from a different manufacturer. The host and target processing devices communicate trough communication means for data exchange in accordance with the test suite to be executed.

With the partitioning of the test suite in accordance with the present invention, a major part of the test suite can be stored and runned on the host processing device, thereby minimising test overhead on the target processing device. Accordingly, the system of the present invention is particularly suited for the testing of embedded software on a target processing device.

In practice, the test specification or test suite is assembled on the host, such that at an early stage of the software development the test suite can already be defined.

In a preferred embodiment of the invention, the test suite is implemented in accordance with the TestFrame architecture disclosed above. That is, comprising a test specification part and a test navigation part, wherein the test navigation part comprises a host test navigation portion running on the host processing device and a target test navigation portion running on the target processing device. The test specification part is completely stored on the host processing device and the test navigation is split-up over the host and the target processing devices. As a result, code on the target processing device can be minimised, such that a minimum overhead is required for the target processing device, which provides an excellent system for automated testing of embedded software.

The partitioning between a host and target processing device in accordance with the present invention may have an influence on the real-time behaviour of the software to be tested. Accordingly, in a yet further embodiment of the system according to the invention, the target navigation portion comprises navigation data critical for supporting real-time test operation.

In order to provide a system supporting a broad choice of target systems to be tested, in a preferred embodiment of the invention, the communication means are arranged to provide a communication protocol transparent for communication between the host processing device and the target processing device.

In a yet further embodiment of the invention, the communication means support a Remote Procedure Call (RPC) mechanism as well as means to control remote memory, that is for allocating and de-allocating memory on the target and to copy memory data from the host to the target, and vice versa.

In a preferred embodiment of the invention, the communication means comprise a first or platform interface, supporting an operating system such as but not limited to pSOS, Windows® , Linuxe, and VxWorks, and a second or protocol interface, supporting communication protocols, such as but not limited to RS 232, TCP/IP, JTAG, etcetera. The communication means further may comprise an application programming interface for application control purposes.

The platform interface abstracts from platform-specific details, such as the processor and the (real-time) operating system. The protocol interface abstracts from the actual communication protocol between the host and target, and should support communication over a variety of standardized and specific communication protocols. The protocol interface enables extension of the communication means by any communication protocol, providing reliable bi-directional data transfer.

In a yet further embodiment of the invention, the communication means comprise first communication means running on the host processing device and second communication means running on the target processing device, where the host and target processing devices operate with different operating systems.

The communication means, in a yet further embodiment of the system according to the invention, may support threads running on the host processing device and the target processing device, which threads are operative for receiving and transmitting data.

In an other embodiment, the communication means may be based on polling the protocol for receiving and transmitting data. As a consequence, this can lead to simpeler platform interfaces, compared to communication means, supporting threads, and without operating system dependency or even the need for an operating system at all.

In order to provide a reliable communication, the communication means may be arranged for applying error correction code functions on data to be received or transmitted.

The invention further relates to communication means as disclosed above, and a method for automated testing of software in accordance with a test suite, wherein a first part of said test suite is stored and runned on a first or host processing device, and wherein a second part of said test suite is stored and runned on a target processing device comprising said software to be tested, wherein data between said host processing device and said target processing device are exchanged through a communication link between said host processing device and target processing device.

The above-mentioned and other features and advantages of the invention are illustrated in the following description with reference to the enclosed drawings.

### Brief Description of the Drawings

Figure 1 shows a circuit diagram of a known software test architecture, called TestFrame.

Figure 2 shows a circuit diagram of a preferred embodiment of the system according to the invention.

Figure 3 shows a circuit diagram of a preferred embodiment of the communication means used in the system according to the invention.

### Detailed Description of the Embodiment

Without the intention of a limitation, the invention will now be described and illustrated with reference to a preferred embodiment of a test system for testing embedded software.

Figure 2 shows a circuit diagram of a preferred embodiment of the system 10 according to the invention, comprising a first or host processing device 11 and a second or target processing device 12, having the software 4 to be tested. The host processing device 11 and the target processing device 12 connect by communication means 13 for duplex exchange of data between the processing devices 11, 12.

In the preferred embodiment shown, the test suite is build up in accordance with the TestFrame architecture disclosed above, comprising a test specification part and a test navigation part. The test specification is implemented in a test specification block or module 14 which is stored and runs on the host processing device 11. Test navigation is split up over the host processing device 11 and the target processing device 12, such that the host 11 comprises a host navigation block or module 15 and the target processing device 12 comprises a target navigation block or module 16. Communication between the test specification block 14 and the host and target navigation blocks 17, 18 is exchanged through the communication means 13.

In the preferred embodiment shown in figure 2, the communication means 13 comprise first communication means 17 and second communication means 18, arranged to communicate over a communication link 19 in accordance with a communication protocol such as, but not limited to, RS232, TCP/IP, JTAG, etcetera. The communication link 19 can be a wired or wireless link, including an RF and IR transmission link, suitable for the exchange of data in accordance with the protocol specified.

The TestFrame engine 20, which links the test specification block 14 and the host navigation block 15 recites on the host processing device 11, as well as the test report generator 21.

It will be appreciated that the major part of the test suite is stored and runs on the host processing device 11, such that there is a limited need for the use of scarce resources on the target processing device 12. Therefore, the heterogeneous processing environment according to the present invention is excellently suitable for testing embedded software in accordance with the TestFrame concept disclosed above.

The system comprising the software to be tested can have hardware interfaces, such as serial and parallel ports, manual switches and LEDs. If tooling for external interfaces is available, this should be integrated in the navigation code on the host processing device 11, i.e. the host navigation block 15.

As discussed above, for testing embedded software, code on the target processing device 12 should be minimized and navigation should therefore as much as possible be implemented on the host 11. Although rules of thumb exists how this partitioning should take place, test developers are free to deviate and to apply a dedicated partitioning scheme. An other aspect of the partitioning is that host-target communication may influence the real-time behaviour of the software to be tested. If this is the case, advantageously the target navigation block 16 should comprise navigation data critical for supporting real-time test operation.

The system according to the present invention is arranged such that navigation code can be developed in mature and proven languages, such as but not limited to C, C++, JAVA. Although the development of a dedicated script language is possible, use of known languages is preferred, because knowledge of and experience with such languages is available as well as tool support, such as integrated development environments, source level debuggers, etcetera.

Also in the case of tooling for external interfaces, the use of mature languages is beneficial to support ease of integration. For many interfaces, such as serial and parallel ports, drivers are available while for other interfaces, such as manual switches and LEDs, dedicated hardware/software tools have to be developed.

It will be appreciated that the inventive concept of providing two processors for executing the test procedure, i.e. the host processing device and the target processing device, is not limited to test suites which operate in accordance with the TestFrame concept. Rather, the inventive concept can be used for any type of test suites or test procedures, while maintaining the advantages of a very limited use of the scarce processing and memory resources on the target processing device.

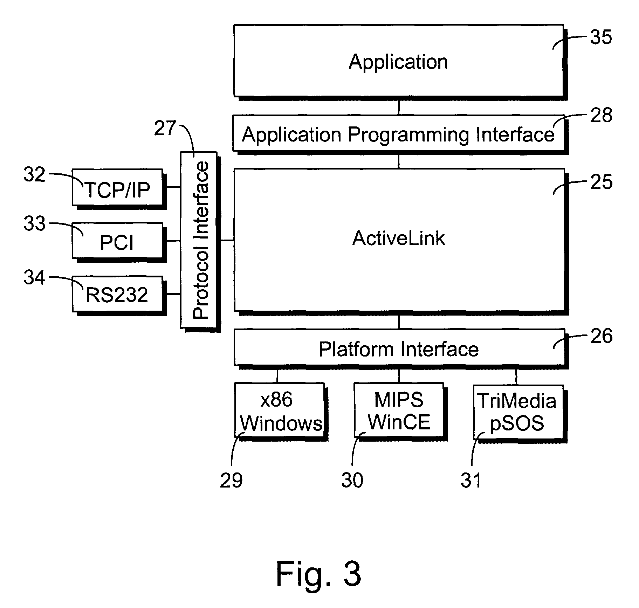

Figure 3 shows a preferred embodiment of the communication means, developed for duplex communication between the host and target processing devices 11, 12.

The communication means 13, 17, 18 comprise a communication control block or module 25, called "ActiveLink", having a first or platform interface 26 and a second or protocol interface 27, and an application programming interface 28.

The platform interface 26 abstracts from platform specific details, such as the processor and the (real-time) operating system of the host and target processing device 11, 12. In figure 3, ports 29, 30, 31 have been shown for x86/Windows® , MIPS/WinCE, TreeMedia/pSOS, respectively. With these interfaces, the processing devices can be linked with relatively little effort, where the processing devices operate with different operating systems.

The protocol interface 27 supports the actual communication protocol between the host and target processing devices 11, 12. In the figure, ports 32, 33, 34 are shown for TCP/IP, PCI and RS232 communication. The control block 25 is, of course, extendable by any communication protocol providing reliable bi-directional data transfer.

The application programming interface 28 enables the execution of a particular application 35, among others for control purposes.

The communication means play an important role in the system according to the invention, by offering a communication protocol transparent for communication between the host processing device 11 and the target processing device 12.

The communication control block 25 may operate in accordance with a Remote Procedure Call (RPC) mechanism, with which a processing device can provide commands and tasks to an other processing device, also called "remote function call", and with which a processing device can allocate and de-allocate, and read and write in the memory of an other connected processing device, called "remote memory control". RPC is itself known from the JAVA programming language, in which pieces of software are executed on a so-called virtual machine. However, the communication means according to the present invention are based on a mature higher programming language, such as C and C++. The RPC mechanism may be based on using an address of a function to be called.

In a preferred embodiment of the invention, the communication means are arranged to deal automatically with different parameter types in the data exchange over the communication link 19 between the host and target processing devices 11, 12. Accordingly, the user of the system does not have to bother about conversions of parameters, such as converting a so-called long integer on the host processing device into a so-called short integer on the target processing device.

From the above, it will be clear that the communication control block 25 supports memory data exchange, with which pieces of data between memory devices can be exchanged, as well as control of the processor of a processing device is possible.

The communication control block 25 also comprises a function list in which essential functions of the target processing device 12 are acquired. This provides the possibility to recall functions with their corresponding parameters and to communicate the result back. Functions do not have to be specified, such that the recall and processing thereof does not depend on a particular format.

Communication at the basic level is performed by executing threads. Threads run both on the host processing device 11 and the target processing device 12. The thread program regularly monitors a communication port 32, 33, 34, in order to verify whether data is received or transmitted. As an alternative, it is possible to support a rapid execution of communication functions for receiving and transmitting data at a communication port 32, 33, 34. However, as a consequence, at a higher level of the communication control block 25 specific tasks may have to be temporarily suspended.

In order to enhance the reliability of the actual communication, error correction codes may be used on the communication link 19. Such error correction codes are generally known in practice, and do not need further elucidation.

The communication means 13 according to the present invention are designed such to support different systems, distribution of software applications in a heterogeneous processor architecture, and are excellently suitable for extending the communication protocols and operating systems to be supported.

The system and method according to the present invention offers the ability for test developers to partition a software test into three parts, i.e. test specification, test navigation on the host processing device, and test navigation on the target processing device. This partitioning offers a flexible solution for test development in the sense that trade offs of where to put what functionally are not have to be made beforehand. Although rules of thumb exist how this partitioning should take place, test developers are free to deviate and to apply a dedicated partitioning scheme. The system according to the present invention has a flexible design that can easily be adapted and applied for the software testing of a specific target processing device, in particular for the testing of embedded software.

## Claims

1. A system for automated testing of software, comprising a first or host processing device, a second or target processing device, and communication means for duplex exchange of data between said processing devices in accordance with a test suite, said target processing device comprising said software to be tested.

2. A system according to claim 1, wherein said host processing device is a host computer arranged for processing and storing a first part of said test suite, and said target processing device is arranged for storing and processing a second part of said test suite.

3. A system according to any of the previous claims, wherein said target processing device comprises embedded software to be tested.

4. A system according to any of the previous claims, wherein said test suite comprises a test specification part and a test navigation part, wherein said test navigation part comprises a host test navigation portion running on said host processing device and a target test navigation portion running on said target processing device.

5. A system according to claim 4, wherein said target navigation portion comprises navigation data critical for supporting real-time test operation.

6. A system according to any of the previous claims, wherein said host processing device is arranged for performing such part of said test suite for minimizing test overhead on said target processing device.

7. A system according to any of the previous claims, wherein said communication means are arranged to provide a communication protocol transparent for communication between said host processing device and said target processing device.

8. A system according to any of the previous claims, wherein said communication means are arranged for dealing automatically with different parameter types in said data exchange.

9. A system according to any of the previous claims, wherein said communication means comprise a Remote Procedure Call (RPC) mechanism.

10. A system according to claim 9, wherein said RPC mechanism is arranged for using an address of a function to be called.

11. A system according to any of the previous claims, wherein said communication means comprise a remote memory control mechanism.

12. A system according to claim 11, wherein said remote memory control mechanism is arranged for memory allocation, memory de-allocation, and memory copying.

13. A system according to any of the previous claims, wherein said communication means having a platform interface supporting several operating systems.

14. A system according to any of the previous claims, wherein said communication means having a protocol interface supporting several communication protocols.

15. A system according to any of the previous claims, wherein said communication means comprise first communication means running on said host processing device and second communication means running on said target processing device.

16. A system according to any of the previous claims, wherein said communication means comprise a function list for storing key functions of said target processing device for retrieval by parameters associated with said key functions.

17. A system according to any of the previous claims, wherein said communication means support threads running on said host processing device and said target processing device, said threads being operative for receiving and transmitting data.

18. A system according to any of the claims 1-17, wherein said communication means support rapid execution of a communication function for receiving and transmitting data at an interface.

19. A system according to any of the previous claims, wherein said communication means are arranged for applying error correction functions on data to be received or transmitted.

20. Communication means arranged according to any of the preceding claims.

21. A method for automated testing of software in accordance with a test suite, wherein a first part of said test suite is stored and runned on a first or host processing device, and wherein a second part of said test suite is stored and runned on a target processing device comprising said software to be tested, wherein data between said host processing device and said target processing device are exchanged through a communication link between said host processing device and said target processing device.

22. A method according to claim 21, wherein said test suite comprises a test specification part and a test navigation part, wherein said test navigation part comprises a host test navigation portion which runs on said host processing device, and a target test navigation portion which runs on said target processing device.

23. A method according to claim 21 or 22, wherein said target processing device comprises embedded software to be tested.
